# EUROPÄISCHE PATENTANMELDUNG

(11) **EP 2 709 225 A1**
(43) Veröffentlichungstag der Anmeldung: **19.03.2014**
(21) Anmeldenummer: 12306123.6
(22) Anmeldetag: 18.09.2012
(51) Int. Cl.: H02G 15/34

(54) **Anordnung und Verfahren zum Kühlen eines supraleitfähigen Kabels**

(71) Anmelder: Nexans, 75008 Paris (FR)
(72) Erfinder: Dr. Stemmle, Mark, 30625 Hannover (DE); Dr. Marzahn, Erik, 30853 Langenhagen (DE); Di Palma, Michele, 31832 Springe (DE); Schippl, Klaus, 30659 Hannover (DE); Lallouet, Nicolas, 62132 Fiennes (FR)
(74) Vertreter: Döring, Roger

(57) **Zusammenfassung**

Es wird eine Anordnung zum Kühlen eines supraleitfähigen Kabels (4) angegeben, das einen rohrförmigen Kern aufweist und das in einem Kryostat (KR) angeordnet ist, der aus mindestens einem thermisch isolierten Rohr besteht. Der Kryostat (KR) umschließt neben dem Kabel (4) einen Hohlraum (HR) zum Durchleiten eines fließfähigen Kühlmittels. Das Kabel (4) und der Kryostat (KR) sind an beiden axialen Enden jeweils an einen Endverschluß und/oder eine Verbindungsstelle angeschlossen. Zumindest an einem Endverschluß (2) sind eine Einspeisestelle (19) und ein Auslaß (20) für ein Kühlmittel angebracht, von denen eine mit dem Hohlraum (HR) des Kryostats (KR) und die andere mit einem Innenraum (15) des Endverschlusses (2) verbunden ist. In dem Endverschluß (2) ist eine Sperre (21) zwischen dem Hohlraum (HR) des Kryostats (KR) und dem Innenraum (15) des Endverschlusses (2) angebracht.

## Beschreibung

Die Erfindung bezieht sich auf eine Anordnung zum Kühlen eines supraleitfähigen Kabels, das einen rohrförmigen Kern aufweist und das in einem Kryostat angeordnet ist, der aus mindestens einem thermisch isolierten Rohr besteht, welches neben dem Kabel einen Hohlraum zum Durchleiten eines fließfähigen Kühlmittels umschließt, bei welcher das Kabel und der Kryostat an beiden axialen Enden jeweils an einen Endverschluß und/oder eine Verbindungsstelle angeschlossen sind, sowie auf ein Verfahren zum Kühlen des Kabels (US 2005/0056456 A1).

Ein supraleitfähiges Kabel hat elektrische Leiter aus einem Material, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke, die kritische Stromstärke, nicht überschritten wird. Geeignete Materialien sind beispielsweise oxidische Materialien auf Basis seltener Erden (ReBCO), insbesondere YBCO (Yttrium-Barium-Kupfer-Oxid), oder BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Ein anderes geeignetes Material ist beispielsweise Magnesiumdiborid, das bei Temperaturen von etwa 39 K oder niedriger in den supraleitfähigen Zustand übergeht. Geeignete Kühlmittel sind beispielsweise Stickstoff, Helium, Neon und Wasserstoff oder Gemische dieser Stoffe.

Aus der EP 1 441 367 A2 geht eine Anordnung mit drei supraleitfähigen Kabeln hervor, die zusammen mit einem für die Rückführung eines fließfähigen Kühlmittels vorgesehenen Rohr in einem aus zwei konzentrisch zueinander angeordneten, eine Vakuumisolierung zwischen sich einschließenden Rohren bestehenden Kryostat untergebracht sind. Das Kühlmittel wird in einer Richtung durch den Kryostat gepumpt und in der entgegengesetzten Richtung durch das Rohr zurückgeführt.

Die eingangs erwähnte US 2005/0056456 A1 beschreibt eine Anordnung mit einem supraleitfähigen Kabel, das einen rohrförmigen Kern hat und unter Freilassung eines Hohlraums in einem aus zwei durch eine Vakuumisolierung gegeneinander isolierten Rohren bestehenden Kryostat angeordnet ist. Sowohl durch den rohrförmigen Kern des Kabels als auch durch den Hohlraum des Kryostats kann ein Kühlmittel geleitet werden. Diese Druckschrift befaßt sich im wesentlichen mit der Abdichtung der Verbindungsstellen von aus Kryostat und Kabel bestehenden Modulen, damit das Vakuum zwischen den Rohren des Kryostats aufrechterhalten werden kann. Über die Führung des Kühlmittels innerhalb der Anordnung ist in der Druckschrift nichts erwähnt.

Der Erfindung liegt die Aufgabe zugrunde, die eingangs beschriebene Anordnung und das zugehörige Verfahren so zu gestalten, daß eine wirksame Kühlung des supraleitfähigen Kabels auf einfache Art und Weise erreicht wird.

Diese Aufgabe wird gemäß der Erfindung dadurch gelöst,
- daß zumindest an einem Endverschluß eine Einspeisestelle und ein Auslaß für ein Kühlmittel angebracht sind, von denen eine mit dem Hohlraum des Kryostats und die andere mit einem Innenraum des Endverschlusses verbunden ist, und
- daß in dem Endverschluß eine Sperre zwischen dem Hohlraum des Kryostats und dem Innenraum des Endverschlusses angebracht ist.

Bei dieser Anordnung werden das auf Kühltemperatur befindliche fließfähige Kühlmittel, beispielsweise flüssiger Stickstoff, und ein entlang des supraleitfähigen Kabels geführtes und dabei erwärmtes Kühlmittel in dem Endverschluß durch eine einfache, möglichst dichte Sperre so voneinander getrennt geführt, daß eine Vermengung der beiden Kühlmittelströme ausgeschlossen ist. Als Sperre kann beispielsweise mindestens eine aus Edelstahl oder aus glasfaserverstärktem Kunststoff bestehende Scheibe eingesetzt werden. Weitere Maßnahmen, wie voneinander getrennte Rohre oder andere Führungselemente, werden nicht benötigt. Die Einspeisestelle kann mit dem Hohlraum des Kryostats oder mit dem Innenraum des Endverschlusses verbunden sein. Das gilt analog dazu auch für den Auslaß.

In bevorzugter Ausführungsform wird das auf Kühltemperatur befindliche Kühlmittel an der Einspeisestelle in den Hohlraum des Kryostats eingespeist, gegebenenfalls am fernen Ende der Anordnung umgelenkt und durch den rohrförmigen Kern des Kabels bis in den Innenraum des Endverschlusses zurückgeführt. Das dadurch erwärmte Kühlmittel kann dann über den Auslaß unmittelbar aus dem Innenraum des Endverschlusses abgeführt werden. Diese Ausführungsform der Anordnung hat den Vorteil, daß das erwärmte Kühlmittel durch im Endverschluß vorhandene Stromzuführungen zwar weiter erwärmt wird, ohne daß sich aber störende Auswirkungen auf die Anordnung ergeben, weil das Kühlmittel - wie schon erwähnt - direkt aus dem Endverschluß abgeführt wird.

Ein Ausführungsbeispiel des Erfindungsgegenstandes ist in den Zeichnungen dargestellt.

Es zeigen:
Fig. 1 in schematischer Darstellung eine Übertragungsstrecke für elektrische Energie mit einer Anordnung nach der Erfindung.
Fig. 2 einen Querschnitt durch ein supraleitfähiges Kabel.
Fig. 3 eine Einzelheit aus Fig. 1 in vergrößerter Darstellung.

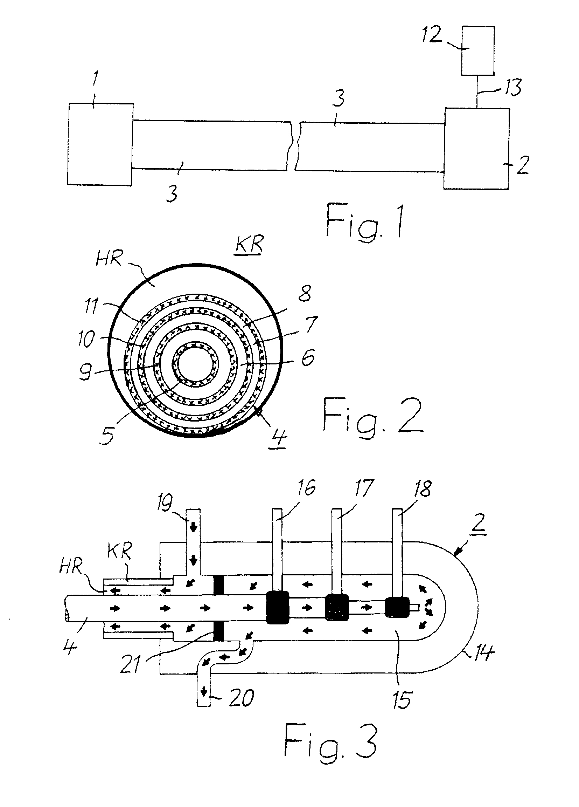

Die Übertragungsstrecke nach Fig. 1 weist zwei Endverschlüsse 1 und 2 auf, zwischen denen eine Vorrichtung 3 mit mindestens einem supraleitfähigen Kabel 4 (Fig. 2) angebracht ist. Das supraleitfähige Kabel 4 hat einen rohrförmigen Kern 5, der auch als Former bezeichnet wird, um den herum im dargestellten Ausführungsbeispiel drei gegeneinander isolierte, supraleitfähige elektrische Leiter 6, 7 und 8 konzentrisch zueinander angeordnet sind. Zwischen den Leitern 6 und 7 befindet sich jeweils eine Isolierung 9 bzw. 10 und der Leiter 8 ist von einer Isolierung 11 umgeben. Über der Isolierung 11 kann gegebenenfalls ein elektrischer Schirm bzw. Rückleiter angebracht sein.

Das Kabel 4 soll mindestens einen supraleitfähigen Leiter haben. Es ist in einem in Fig. 2 nur durch einen etwas dickeren Kreis angedeuteten Kryostat KR angeordnet, der zur Vorrichtung 3 gehört. Der Kryostat KR besteht aus mindestens einem thermisch isolierten Rohr, vorzugsweise aber aus zwei konzentrisch zueinander angeordneten Rohren, zwischen denen eine Vakuumisolierung angebracht ist. Der Kryostat KR umschließt neben dem supraleitfähigen Kabel 4 einen Hohlraum HR zum Durchleiten eines Kühlmittels.

Die Übertragungsstrecke kann eine Länge von beispielsweise 600 m haben. In ihrem Verlauf kann auch mindestens eine Verbindungsstelle zum Verbinden von jeweils zwei Vorrichtungen 3 angebracht sein. In den Endverschlüssen 1 und 2 ist das supraleitfähige Kabel 4 in bekannter Technik an elektrische Bauteile bzw. Geräte, wie beispielsweise Stromzuführungen, angeschlossen. Der Endverschluß 2 ist im dargestellten Ausführungsbeispiel mit einer Kühlanlage 12 verbunden, welche ein fließfähiges Kühlmittel, beispielsweise flüssigen Stickstoff in gekühltem Zustand, zur Verfügung stellt. Eine solche Kühlanlage könnte auch für den Endverschluß 1 vorgesehen sein. Das Kühlmittel kann aus der Kühlanlage 12 beispielsweise über eine Rohrleitung 13 in bekannter Technik mittels einer Pumpe unter Druck in die Vorrichtung 3 bzw. die Anordnung nach der Erfindung geleitet werden. Das wird im folgenden anhand von Fig. 3 näher erläutert.

In Fig. 3 ist beispielsweise der Endverschluß 2 schematisch angedeutet. Er hat ein thermisch isoliertes Gehäuse 14, das einen Innenraum 15 umschließt. Das supraleitfähige Kabel 4 ragt in den Innenraum 15 des Endverschlusses 2 hinein und endet in demselben. Es ist in Fig. 3 nur schematisch angedeutet, mit Abstufungen an seinem Ende, welche den drei Leitern 6, 7 und 8 gemäß Fig. 2 entsprechen sollen. Diese supraleitfähigen Leiter sind im Endverschluß 2 an nach außen führende Stromzuführungen 16, 17 und 18 angeschlossen. Der das Kabel 4 umgebende Kryostat KR ist fest und dicht mit dem Gehäuse 14 des Endverschlusses 2 verbunden.

Am Gehäuse 14 sind im dargestellten Ausführungsbeispiel einerseits eine Speisestelle 19 zum Zuführen eines auf Kühltemperatur befindlichen Kühlmittels über eine dort angeschlossene Leitung, beispielsweise die Rohrleitung 13, und andererseits ein Auslaß 20 zum Abführen eines erwärmten Kühlmittels über eine nach außen führende Leitung angebracht. Die Speisestelle 19 ist mit dem Hohlraum HR des Kryostats KR verbunden, während der Auslaß 20 an den Innenraum 15 des Endverschlusses 2 angeschlossen ist. Diese Position von Speisestelle 19 und Auslaß 20 ist die bevorzugte Ausführungsform der vorliegenden Anordnung. Der Auslaß 20 könnte auch als Speisestelle für die Zuführung eines Kühlmittels dienen. Die Speisestelle 19 wäre dann der Auslaß für ein Kühlmittel.

Zwischen dem Kryostat KR bzw. dessen Hohlraum HR und dem Innenraum 15 des Endverschlusses 2 ist eine Sperre 21 angebracht, durch welche Kryostat KR und Innenraum 15 wirksam und möglichst dicht voneinander getrennt sind. Die Sperre 21 besteht mit Vorteil aus mindestens einer Scheibe, die innen am Kabel 4 und außen am Endverschluß 2 jeweils dicht anliegt. Sie kann vorzugsweise aus Edelstahl oder aus einem glasfaserverstärkten Kunststoff bestehen. Wenn zwei oder mehr Scheiben eingesetzt werden, dann werden dieselben in axialer Richtung des Kabels 4 nebeneinander positioniert. Durch eine solche Sperre 21 ist gleichzeitig das Kabel 4 im Endverschluß 2 fixiert, so daß eventuell im Kabel 4 auftretende Kräfte nach außen abgeleitet werden können. Das auf Kühltemperatur befindliche Kühlmittel kann wegen der Sperre 21 nur durch den Kryostat KR strömen und das erwärmte Kühlmittel kann nicht in den Kryostat KR gelangen.

Beim Betrieb der Anordnung in der bevorzugten Ausführungsform wird beispielsweise ein auf Kühltemperatur befindliches Kühlmittel aus der Kühlanlage 12 herausgepumpt und in den Hohlraum HR des Kryostats KR geleitet. Es breitet sich entlang des Kabels 4 zum fernen Ende der Anordnung hin in Richtung der Pfeile P1 aus. Das Kühlmittel kann am fernen Ende der Anordnung beispielsweise innerhalb eines Endverschlusses umgeleitet und durch den rohrförmigen Kern 5 des supraleitfähigen Kabels 4 zum Endverschluß 2 zurückgeleitet werden, also in der durch die Pfeile P2 gekennzeichneten Gegenrichtung. Das auf dem Transport durch den Hohlraum HR des Kryostats KR und den Kern 5 des Kabels 4 erwärmte Kühlmittel tritt in den Innenraum 15 des Endverschlusses 2 ein, in welchem es - wie bereits erwähnt - durch die Stromzuführungen 16, 17 und 18 weiter erwärmt werden kann. Das erwärmte Kühlmittel wird durch den Auslaß 20 nach draußen abgeleitet und gegebenenfalls zum erneuten Abkühlen einem Kühlaggregat zugeführt.

Der beschriebene Betrieb der Anordnung mit einer Umlenkung des Kühlmittels am fernen Ende derselben ist nur eine mögliche Ausführungsform. Die durch die Sperre 21 erreichte, dichte Trennung von Hohlraum HR des Kryostats KR und Innenraum 15 des Endverschlusses 2 ist auch dann im beschriebenen Sinne wirksam, wenn durch den Kern 5 des Kabels 4 ein am fernen Ende der Anordnung eingespeistes Kühlmittel transportiert wird, das im Innenraum 15 des Endverschlusses 2 ebenfalls als erwärmtes Kühlmittel ankommt und über den Auslaß 20 nach außen abgeleitet wird.

## Patentansprüche

1. Anordnung zum Kühlen eines supraleitfähigen Kabels, das einen rohrförmigen Kern aufweist und das in einem Kryostat angeordnet ist, der aus mindestens einem thermisch isolierten Rohr besteht, welches neben dem Kabel einen Hohlraum zum Durchleiten eines fließfähigen Kühlmittels umschließt, bei welcher das Kabel und der Kryostat an beiden axialen Enden jeweils an einen Endverschluß und/oder eine Verbindungsstelle angeschlossen sind, **dadurch gekennzeichnet,**
- **daß** zumindest an einem Endverschluß eine Einspeisestelle (19) und ein Auslaß (20) für ein Kühlmittel angebracht sind, von denen eine mit dem Hohlraum (HR) des Kryostats (KR) und die andere mit einem Innenraum (15) des Endverschlusses verbunden ist, und
- **daß** in dem Endverschluß eine Sperre (21) zwischen dem Hohlraum (HR) des Kryostats (KR) und dem Innenraum (15) des Endverschlusses angebracht ist.

2. Anordnung nach Anspruch 1, **dadurch gekennzeichnet, daß** als Sperre (21) mindestens eine vorzugsweise aus Edelstahl oder aus glasfaserverstärktem Kunststoff bestehende Scheibe eingesetzt ist, die einerseits am Kabel (4) und andererseits am Endverschluß dicht anliegt.

3. Anordnung nach Anspruch 1 oder 2, **dadurch gekennzeichnet,**
- **daß** an der mit dem Hohlraum (HR) des Kryostats (KR) verbundenen Einspeisestelle (19) eine Leitung zum Zuführen eines auf Kühltemperatur befindlichen Kühlmittels angeschlossen ist,
- **daß** das supraleitfähige Kabel (4) in dem dasselbe umgebenden Innenraum (15)des Endverschlusses endet und
- **daß** an den Auslaß (20) eine nach außen führende Leitung zum Abführen eines durch den rohrförmigen Kern (5) des Kabels (6) geführten Kühlmittels angeschlossen ist.

4. Verfahren zum Kühlen eines supraleitfähigen Kabels in einer Anordnung nach Anspruch 3, **dadurch gekennzeichnet,**
- **daß** ein auf Kühltemperatur befindliches Kühlmittel an der Einspeisestelle (19) über die Leitung in den Endverschluß (2) eingespeist und durch den Hohlraum (HR) des Kryostats (KR) entlang des Kabels (4) in Richtung eines fernen Endes der Anordnung bewegt wird und
- **daß** ein Kühlmittel vom fernen Ende der Anordnung her durch den rohrförmigen Kern (5) des Kabels (4) in der Gegenrichtung bis in den das Ende des Kabels (4) umgebenden, gegenüber dem Hohlraum (HR) des Kryostats (KR) abgedichteten Innenraum (15) des Endverschlusses (2) bewegt und von dort über den Auslaß (20) nach außen abgeleitet wird.

5. Verfahren nach Anspruch 4, **dadurch gekennzeichnet, daß** das in den Kryostat (KR) eingespeiste Kühlmittel am fernen Ende der Anordnung umgeleitet und durch den rohrförmigen Kern (5) des Kabels (4) in den Endverschluß (2) zurückgeleitet wird.
